# EUROPÄISCHE PATENTSCHRIFT

(11) **EP 3 301 406 B1**
(45) Veröffentlichungstag und Bekanntmachung des Hinweises auf die Patenterteilung: **14.07.2021**
(21) Anmeldenummer: 17190352.9
(22) Anmeldetag: 11.09.2017
(51) Int. Cl.: G01D 18/00, G01D 21/00

(54) **VERWENDUNG EINES SYSTEMS AUS EINER MESSEINRICHTUNG UND EINER ANLAGE**
USE OF A SYSTEM COMPRISING A MEASURING DEVICE AND AN INSTALLATION
UTILISATION D'UN SYSTÈME COMPRENANT UN DISPOSITIF DE MESURE ET UNE INSTALLATION

(30) Priorität: 30.09.2016 DE 102016218969
(43) Veröffentlichungstag der Anmeldung: 04.04.2018
(73) Patentinhaber: Siemens Aktiengesellschaft, 80333 München (DE)
(72) Erfinder: Jürgens, Dirk, 90475 Nürnberg (DE)

(56) Entgegenhaltungen:
- DE-A1- 4 143 092
- DE-A1-102006 020 341
- DE-A1-102007 053 223
- DE-A1-102013 111 714
- US-B1- 6 182 497

## Beschreibung

Die Erfindung betrifft die Verwendung eines Systems aus einer Messeinrichtung und einer Anlage.

In der DE 102013111714 A1 sind ein Verfahren zur Funktionseinstellung einer Messstelle der Prozessautomatisierungstechnik und eine Messstelle offenbart.

In der DE 102007053223 A1 ist ein Verfahren zum Betreiben einer Messstelle mit einer Basiseinheit und einer Sensoreinheit offenbart, wobei die Sensoreinheit lösbar mit der Basiseinheit verbindbar ist.

Messeinrichtungen von elektrischen Anlagen in Form von elektronischen Messgeräten weisen Messeingänge auf, an denen elektrische Ströme und Spannungen als analoge Messgrößen angelegt werden. Sie werden in der Regel im Werk abgeglichen und kalibriert, wobei analoge Norm-Ströme und Norm-Spannungen an den Messeingängen verwendet werden. Als Ergebnis des Abgleichs wird eine Korrekturgröße in einem Speicher abgelegt. Mit Hilfe einer Messfunktion wird anhand der gemessenen Messgröße und der Korrekturgröße jeweils ein digitaler Messwert ermittelt und der Anlage zur Verfügung gestellt. Zur Durchführung der Kommunikation zwischen Anlage und Messgerät dienen allgemein Kommunikations-Parameter, die im Messgerät gespeichert sind. Auch sind häufig Anwendungs-Parameter für die Verwendung der Messwerte durch die Anlage während ihres Betriebs im Messgerät abgelegt.

Die Messgeräte unterliegen im Einsatz unterschiedlichen Einflüssen, wie beispielsweise Temperaturschwankungen, EMV-Einflüssen (Überspannung etc.) und Alterungen der verwendeten Bauteile. Deshalb müssen die Messgeräte regelmäßig kalibriert und ggf. auch neu abgeglichen werden.

Sind die Messgeräte beispielsweise in elektrischen Anlagen fest verbaut sind, ist es meist nicht so einfach, diese aus den bestehenden Anlagen zu nehmen. Außerdem stehen die Messgeräte dann der Anlage für mehrere Tage nicht mehr zur Verfügung. Werden die Messgeräte durch ein Ersatzgerät ersetzt, so fehlen wiederum die im Messgerät gespeicherten Kommunikations- und Anwendungs-Parameter. Diese müssten vor dem Ersetzen in das Ersatzgerät übertragen werden, was mit einem größeren Aufwand verbunden wäre. Im ungünstigsten Fall kann dies zur Abschaltung der Anlage führen, was für den Nutzer mit größeren Problemen verbunden sein kann.

Ebenfalls gibt es rechtliche Vorschriften, die eine Kalibrierung verlangen (Eichwesen, MID und andere anwendbare Standards bezüglich Power Quality usw.). Auch Normen wie die ISO50001 in Deutschland verlangen eine Kalibrierung, die durch den Nutzer umzusetzen ist.

Insbesondere aus der DE102013111714A1 und der DE102007053223A1 sind eine Messeinrichtung und ein Verfahren zur Funktionseinstellung einer Messstelle bekannt, wobei die Messeinrichtung einen Sensor und eine Transmitterschaltung aufweist und der Sensor über die Transmitterschaltung mit einer übergeordneten Datenverarbeitungseinrichtung verbunden ist. Die Funktionseinstellung erfolgt a) durch Lösen des Sensors von der Transmitterschaltung, b) Verbinden eines Mobilteils mit der Transmitterschaltung und Übertragen von Parametern vom Mobilteil in die Transmitterschaltung, c) Lösen des Mobilteils, d) Verbinden des Sensors mit der Transmitterschaltung und e) Übertragen von zumindest einem Parameter von der Transmitterschaltung zum Sensor. Die Messeinrichtung umfasst dabei einen Messaufnehmer, an den eine analoge Messgröße anlegbar ist, und Kalibrierdaten, die in einem Speicher eines Mikroprozessors der Sensorschaltung abgelegt werden, wobei der Mikroprozessor der Sensorschaltung das von einem A/D-Wandler umgewandelte Signal empfängt und es unter Zugriff auf die sich in einem (ersten) Speicher befindlichen Kalibrierdaten für die Übertragung zur Transmitterschaltung vorbereitet. In einem (zweiten) Speicher der Transmitterschaltung sind Konfigurationsdaten oder sonstige sensor- oder messstellenbezogene Daten abgelegt. Die Sensorschaltung und die Transmitterschaltung sind Teile der mehrteilig aufgebauten Messeinrichtung, wobei die Sensorschaltung während des Betriebs der Messstelle abnehmbar und die Transmitterschaltung mittels eines Feldbusses mit einem Prozessleitsystem verbunden ist. Alle relevanten Daten werden jeweils von der Sensorschaltung zur Transmitterschaltung übertragen. Zur Wartung und Kalibrierung im Labor kann die Sensorschaltung entfernt und später wieder an die Transmitterschaltung angeschlossen werden.

Die Aufgabe der Erfindung ist es, die Abschaltung einer Anlage wegen der abzugleichenden und zu kalibrierenden Messeinrichtung zu vermeiden.

Die Aufgabe wird durch die Merkmale des Anspruchs 1 gelöst; die Unteransprüche stellen vorteilhafte Ausgestaltungen dar.

Die Lösung sieht vor, dass das Messmodul zur Durchführung einer Überprüfung der im ersten Speicher abgelegten Korrekturgröße (Abgleichwert) nach Ablauf einer vorgegebenen Nutzungsdauer während des laufenden Betriebs der Anlage abnehmbar ist und dass ein überprüftes und zertifiziertes Messmodul nach seiner Überprüfung und einer Zertifizierung der Überprüfung (Kalibrierung) mit dem fest verbauten Teil verbindbar ist. Der Lösungsgedanke ist also der, den Teil der Messeinrichtung, welcher der Kalibrierung bedarf, vom fest verbauten Teil der Messeinrichtung zu trennen. Das heißt alle notwendigen Daten bezüglich der Kommunikation und Aggregation etc. verbleiben unverändert in der Anlage und nur der Teil mit den notwendigen Abgleichdaten wird abgenommen. Der Vorteil ist dabei, dass man das zu kalibrierende Modul "hot plugged" ausbauen und überprüfen sowie zertifizieren kann. Alternativ kann man es auch durch ein geprüftes Modul ersetzen, jeweils ohne die gesamte Messeinrichtung zu tauschen. Unter dem Begriff Anlage wird hier (in dieser Beschreibung) eine Anlage selbst, aber auch eine Einrichtung und eine Vorrichtung mit einer fest verbauten Messeinrichtung verstanden.

Für Anwendungen der Verrechnung wird eine Plombierung vorgeschlagen, um mögliche Manipulationen zu verhindern.

Für den Hersteller solcher Lösungen wäre es möglich, abgeglichene und kalibrierte Module anzubieten, die man dann einfach austauschen kann.

Auch wäre es für Firmen, die einen Kalibrierungsservice anbieten, möglich, solche Messeinrichtungen vorrätig zu halten und diese als Dienstleistung anzubieten.

Die Erfindung wird nachfolgend anhand einer Anlage beschrieben, die eine fest verbaute Messeinrichtung aufweist. Die Anlage ist hier beispielhaft als Schaltschrank mit einem Schalter ausgebildet. Alternativ könnte die Messeinrichtung auch am Schalter selbst fest verbaut sein. Auf jeden Fall ist die Messeinrichtung mit einer anderen selbständig funktionierenden Einrichtung fest verbunden.

Die Messeinrichtung ist zweiteilig aufgebaut, wobei eines der beiden Teile an der Anlage fest verbaut ist und mit der eine gemeinsame erste Schnittstelle aufweist. Weiter verfügt das fest verbaute Teil über einen Kommunikations-Parameter, der in einem zweiten Speicher abgelegt und für die Kommunikation mit der Anlage erforderlich ist. Ein Anwendungs-Parameter legt die Verwendung der Messwerte durch die Anlage während des Betriebs der Anlage fest. Auch der Anwendungs-Parameter ist im zweiten Speicher abgelegt.

Auf beide Parameter hat die Anlage über die erste Schnittstelle Zugriff, soweit das fest verbaute Teil mit der Anlage verbunden ist.

Das andere Teil ist als separates Messmodul ausgebildet, das auf das fest verbaute Teil aufsteckbar und über eine entsprechende zweite Schnittstelle mit diesem verbindbar ist.

Während des Betriebs der Anlage ist das Messmodul auf das fest verbaute Teil aufgesteckt und über die zweite Schnittstelle mit diesem verbunden.

Das Messmodul weist zwei Messeingänge auf, einen Stromeingang und einen Spannungseingang, an denen zur Messung als analoge Messgrößen ein Strom bzw. eine Spannung angelegt werden. Weiter verfügt die Messeinrichtung über zwei Korrekturgrößen, eine für den Strom und eine für die Spannung.

Weiter verfügt das Messmodul über einen Prozessor, der eine Messfunktion mittels einer Software ausführt, die unter Verwendung des gemessenen Stroms und/oder der gemessenen Spannung und der jeweils zugehörigen Korrekturgröße mindestens einen digitalen Messwert ermittelt und der Anlage über das fest verbaute Teil und dessen erste Schnittstelle zur Verfügung stellt.

Das aufgesteckte Messmodul ist während des Betriebs der Anlage abnehmbar (hier abziehbar), ohne dass der weitere Betrieb dadurch gestört wird. Messwerte stehen der Anlage in dieser Zeit selbstverständlich nicht zur Verfügung.

Beispielsweise muss der freiliegende Stromeingang beim Abnehmen kurzgeschlossen werden, um Überspannungen zu vermeiden. Entsprechend wird der Spannungseingang sicherheitshalber abgedeckt oder es werden entsprechende andere Vorkehrungen getroffen, abhängig von der verwendeten Spannungsebene und gegebenenfalls vorhandenen externen Wandlern.

Die Korrekturgrößen der Messeinrichtung werden durch einen Abgleich ermittelt, bei dem mehrere analoge Norm-Messgrößen an den beiden Messeingängen angelegt werden. Die ermittelten Korrekturgrößen werden in einem ersten Speicher des Messmoduls abgelegt.

Der Abgleich erfolgt bei der ersten Inbetriebnahme der Messeinrichtung. Nach Ablauf einer vorgegebenen Nutzungsdauer ist ein erneuter Abgleich, d.h. eine Überprüfung der beiden im ersten Speicher abgelegten Korrekturgrößen (also eine Kalibrierung) erforderlich. Zur Durchführung der Überprüfung wird das Messmodul während des laufenden Betriebs vom fest verbauten Teil der Messeinrichtung einfach abgezogen und nach der Überprüfung und einer Zertifizierung der Überprüfung (Kalibrierung) wieder auf das fest verbaute Teil aufgesteckt.

Alternativ kann auch ein anderes überprüftes und zertifiziertes Messmodul aufgesteckt werden.

Anschließend erfolgt eine Plombierung des aufgesteckten Messmoduls, um mögliche Manipulationen zu verhindern.

## Patentansprüche

1. Verwendung eines Systems aus einer Messeinrichtung und einer Anlage, wobei die Messeinrichtung umfasst:
mindestens eine Korrekturgröße, deren Ermittlung während eines Abgleichs erfolgt, bei dem analoge Norm-Messgrößen an dem mindestens einen Messeingang anliegen,
ein Messmodul mit einem Prozessor, der eine Messfunktion mittels einer Software ausführt,
einen im Messmodul befindlichen ersten Speicher, in dem die mindestens eine Korrekturgröße abgelegt ist,
mindestens eine Messfunktion, deren Ausführung mittels des Prozessors und der Software erfolgt, wobei die Messfunktion unter Verwendung der analogen Messgröße und der mindestens einen Korrekturgröße einen digitalen Messwert ermittelt und der Anlage zur Verfügung stellt,
mindestens einen Kommunikations-Parameter für die Kommunikation mit der Anlage und/oder mindestens einem Anwendungs-Parameter für die Verwendung der Messwerte durch die Anlage während des Betriebs der Anlage, und
einen zweiten Speicher, in dem der mindestens eine Kommunikations-Parameter und/oder mindestens eine Anwendungs-Parameter abgelegt sind,
wobei die Messeinrichtung zweiteilig ausgeführt ist, wobei eines der beiden Teile, in dem sich der zweite Speicher befindet, an der Anlage fest verbaut ist und das andere Teil als separates Messmodul ausgebildet ist,
wobei das festverbaute Teil eine gemeinsame Schnittstelle mit der Anlage aufweist, über welche die Anlage unabhängig vom Messmodul Zugriff auf den mindestens einen Kommunikations-Parameter und/oder mindestens einen Anwendungs-Parameter hat, und dass das Messmodul während des Betriebs der Anlage abnehmbar ist,
**dadurch gekennzeichnet,**
**dass** das Messmodul zwei Messeingänge, nämlich einen Stromeingang und einen Spannungseingang, aufweist, an denen zur Messung als analoge Messgrößen ein Strom und eine Spannung angelegt werden,
**dass** das Messmodul zur Durchführung einer Überprüfung der im ersten Speicher abgelegten Korrekturgrößen nach Ablauf einer vorgegebenen Nutzungsdauer während des laufenden Betriebs der Anlage abnehmbar ist, wobei der freiliegende Stromeingang beim Abnehmen kurzgeschlossen wird, und
**dass** ein überprüftes und zertifiziertes Messmodul nach seiner Überprüfung und einer Zertifizierung der Überprüfung mit dem fest verbauten Teil verbindbar ist.

2. Verwendung eines Systems aus einer Messeinrichtung und einer Anlage nach Anspruch 1,
**dadurch gekennzeichnet,**
**dass** das Messmodul auf das festverbaute Teil aufsteckbar ist.

3. Verwendung eines Systems aus einer Messeinrichtung und einer Anlage nach Anspruch 1 oder 2,
**dadurch gekennzeichnet,**
**dass** das festverbaute Teil und das Messmodul mit einer Plombe versehbar ist.

## Claims

1. Use of a system comprising a measurement device and an installation, wherein the measurement device comprises:
at least one correction variable which is determined during a comparison in which analogue standard measurement variables are applied to the at least one measurement input,
a measurement module having a processor which performs a measurement function by means of software,
a first memory which is located in the measurement module and stores the at least one correction variable,
at least one measurement function which is performed by means of the processor and the software, wherein the measurement function determines a digital measured value using the analogue measurement variable and the at least one correction variable and provides the installation with said measured value,
at least one communication parameter for communicating with the installation and/or at least one application parameter for the use of the measured values by the installation during operation of the installation, and
a second memory which stores the at least one communication parameter and/or at least one application parameter,
wherein the measurement device is designed in two parts, wherein one of the two parts, which contains the second memory, is permanently installed on the installation and the other part is in the form of a separate measurement module,
wherein the permanently installed part has a common interface with the installation, via which the installation has access to the at least one communication parameter and/or at least one application parameter independently of the measurement module, and the measurement module can be removed during operation of the installation,
**characterized**
**in that** the measurement module has two measurement inputs, namely a current input and a voltage input, to which a current and voltage are applied as analogue measurement variables for measurement,
**in that** the measurement module can be removed after expiry of a predefined operating life during ongoing operation of the installation in order to check the correction variables stored in the first memory, wherein the exposed current input is short-circuited during removal, and
**in that** a measurement module which has been checked and certified can be connected to the permanently installed part after it has been checked and after the check has been certified.

2. Use of a system comprising a measurement device and an installation according to Claim 1,
**characterized**
**in that** the measurement module can be plugged onto the permanently installed part.

3. Use of a system comprising a measurement device and an installation according to Claim 1 or 2,
**characterized**
**in that** the permanently installed part and the measurement module can be provided with a lead seal.

## Revendications

1. Utilisation d'un système comprenant un dispositif de mesure et une installation, le dispositif de mesure comprenant :
au moins une variable de correction, qui est déterminée lors d'une comparaison, dans laquelle des grandeurs de mesure standard analogiques sont présentes sur l'au moins une entrée de mesure,
un module de mesure doté d'un processeur qui exécute une fonction de mesure au moyen d'un logiciel,
une première mémoire située dans le module de mesure, dans laquelle l'au moins une variable de correction est stockée, au moins une fonction de mesure qui est exécutée au moyen du processeur et du logiciel, la fonction de mesure déterminant et mettant à disposition de l'installation une valeur de mesure numérique en utilisant la grandeur de mesure analogique et l'au moins une variable de correction,
au moins un paramètre de communication pour la communication avec l'installation et/ou au moins un paramètre d'application pour l'utilisation des valeurs de mesure par l'installation pendant le fonctionnement de l'installation, et
une seconde mémoire dans laquelle l'au moins un paramètre de communication et/ou l'au moins un paramètre d'application sont stockés,
le dispositif de mesure étant conçu en deux parties, l'une des deux parties dans laquelle se trouve la seconde mémoire étant installée de manière fixe sur l'installation et l'autre partie étant conçue comme un module de mesure séparé,
la partie installée de manière fixe ayant une interface commune avec l'installation, via laquelle l'installation a accès à l'au moins un paramètre de communication et/ou à l'au moins un paramètre d'application indépendamment du module de mesure, et le module de mesure pouvant être retiré pendant le fonctionnement de l'installation,
**caractérisée en ce que**
le module de mesure comporte deux entrées de mesure, à savoir une entrée de courant et une entrée de tension, auxquelles un courant et une tension sont appliqués en tant que grandeurs de mesure analogiques pour la mesure,
**en ce que**
le module de mesure peut être retiré pour effectuer une vérification des variables de correction stockées dans la première mémoire après qu'une période d'utilisation prédéfinie s'est écoulée pendant le fonctionnement de l'installation, l'entrée de courant exposée étant court-circuitée lors du retrait, et **en ce que**
un module de mesure contrôlé et certifié peut être connecté à la partie installée de manière fixe après son contrôle et la certification du contrôle.

2. Utilisation d'un système comprenant un dispositif de mesure et une installation selon la revendication 1,
**caractérisée en ce que**
le module de mesure peut être enfiché sur la partie installée de manière fixe.

3. Utilisation d'un système comprenant un dispositif de mesure et une installation selon la revendication 1 ou 2,
**caractérisée en ce que**
la partie installée de manière fixe et le module de mesure peuvent être dotés d'une fermeture de sécurité.
